Europäisches Patentamt

European Patent Office

Office européen des brevets

(11) Veröffentlichungsnummer : **0 129 150**
B1

# (12) EUROPÄISCHE PATENTSCHRIFT

(45) Veröffentlichungstag der Patentschrift :
26.04.89

(21) Anmeldenummer : 84106461.1

(22) Anmeldetag : 06.06.84

(51) Int. Cl.⁴ : **G 01 J  5/00**

(54) **Verfahren zur berührungslosen, emissionsgradunabhängigen Strahlungsmessung der Temperatur eines Objekts und Vorrichtung zur Durchführung der Verfahren.**

(30) Priorität : 16.06.83 DE 3321874
16.06.83 DE 3321875

(43) Veröffentlichungstag der Anmeldung :
27.12.84 Patentblatt 84/52

(45) Bekanntmachung des Hinweises auf die Patenterteilung : 26.04.89 Patentblatt 89/17

(84) Benannte Vertragsstaaten :
DE FR GB IT NL SE

(56) Entgegenhaltungen :
DE–A– 3 115 887
DE–A– 3 149 523

(73) Patentinhaber : Deutsche Forschungs- und Versuchsanstalt für Luft- und Raumfahrt e.V.
Linder Höhe Postfach 90 60 58
D-5000 Köln 90 (DE)

(72) Erfinder : **Tank, Volker**
**Stegener-Strasse 4**
**D-8081 Eching a.A. (DE)**

(74) Vertreter : **von Kirschbaum, Albrecht, Dipl.-Ing.**
**Hermann-Ehlers-Strasse 21a**
**D-8034 Germering (DE)**

**Beschreibung**

Die Erfindung betrifft ein Verfahren zur berührungslosen, emissionsgradunabhängigen Strahlungsmessung der Temperatur eines Objekts sowie ein Verfahren zur Bestimmung des Spektralemissionsgrades eines Objekts und Vorrichtungen zur Durchführung der Verfahren. Hierbei kann die Strahlungsmessung zur Bestimmung der Temperatur und/oder des Emissionsgrades eines natürlichen oder künstlichen Objekts im infraroten und/oder sichtbaren Bereich (beispielsweise bei Gluttemperaturen) erfolgen, was durch Messung der Strahldichte oder -stärke möglich ist.

Berührungslose Strahlungsmessungen dieser Art finden beispielsweise in der Verfahrenstechnik Anwendung, wenn die Qualität der erzeugten Produkte sehr stark von dem Einhalten bestimmter Temperaturen oder Temperaturabläufe bei der Fertigung abhängt. Beispiele hierfür sind das Brennen hochgenauer Keramikteile, das Schmelzen von Legierungen oder das Zonenziehen zur Dotierung von Halbleitermaterialien. Dabei besteht jedoch die Schwierigkeit, daß nur die scheinbare Temperatur des Objekts und nicht die tatsächliche Temperatur des Objekts gemessen werden kann, falls dessen Emissionsgrad nicht bekannt ist. Bei der Strahlungsmessung wird nämlich die Summe von zwei Strahlungskomponenten gemessen : die entsprechend seiner Temperatur und seinem Emissionsgrad $\varepsilon$ vom Objekt ausgesandte Eigenstrahlung und die entsprechend seinem Reflexionsgrad $\delta$ an ihm reflektierte Umgebungsstrahlung (entsprechend der Umgebungstemperatur). Nur über die Kenntnis des Emissionsgrades sind aber beide Anteile zu trennen. (Es wird angenommen, daß die Strahlungs-Transmission der Objekte vernachlässigbar ist).

Es wird daher als Nachteil bekannter Verfahren und Vorrichtungen dieser Art angesehen, daß damit der Emissionsgrad nicht gemessen werden kann, und daher Eigenstrahlungsanteil und reflektierte Strahlung nicht zu trennen sind.

Es sind zwar bereits sogenannte Emissiometer bekannt, mit denen für wissenschaftliche Zwecke in Laboratorien der Emissionsgrad von Materialien gemessen werden kann. Mit derartigen Meßeinrichtungen sind jedoch Messungen unter Realbedingungen nicht ohne weiteres durchführbar, wie sie beispielsweise in der Verfahrenstechnik oder Bautechnik vorliegen. Eine Messung unter Realbedingungen wäre auch deshalb von erheblichem praktischem Interesse, weil damit auch die Einflüsse von Witterung und Alterung auf den Emissionsgrad bestimmt werden könnten.

In der Bautechnik und in der Solartechnik ist die Kenntnis des Emissionsgrades von Materialien und Baustoffen insbesondere deshalb von Bedeutung, weil zum Zwecke von Energieeinsparungen die Strahlungsbilanz von Solarkollektoren oder Gebäuden optimiert werden soll. Ein Solarkollektor soll beispielsweise möglichst viel Strahlung von der Sonne aufnehmen, während ein Wohngebäude oder ein Bürogebäude möglichst wenig Infrarotstrahlung an die Umgebung abgeben soll.

Auf vielen Anwendungsgebieten der Fernerkundung vom Flugzeug oder Satelliten aus ist die Kenntnis des Emissionsgrades von Materialien und natürlichen oder künstlichen Objekten wesentliche Voraussetzung zur Erzielung quantitativer, interpretierbarer Ergebnisse (so beispielsweise Suche nach Bodenschätzen, Mineralogie, Geologie, Land- und Forstwirtschaft, Umweltschutz, Städteplanung, Klimatologie, Klassifizierung).

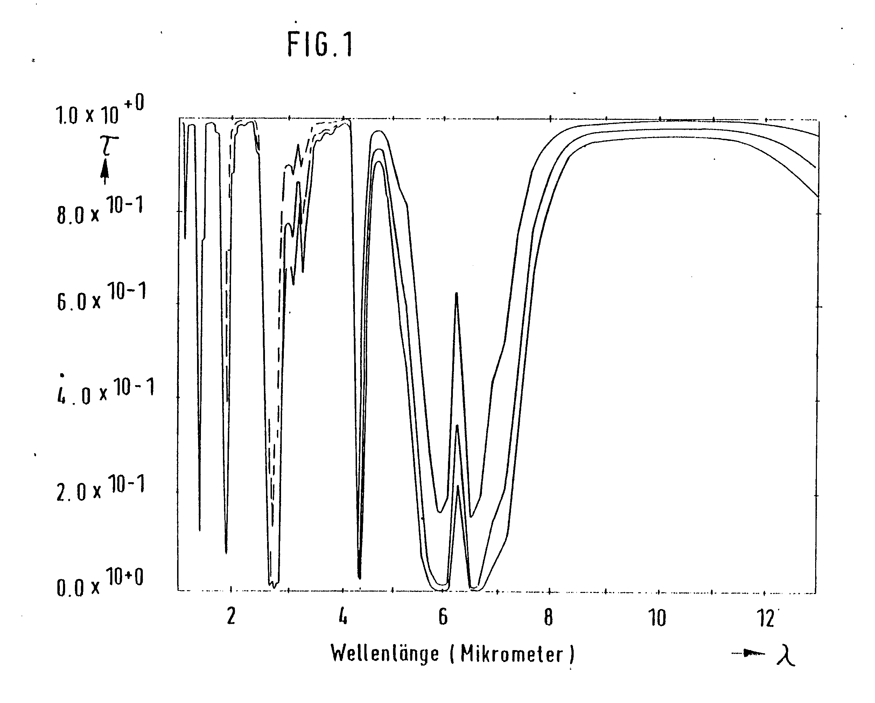

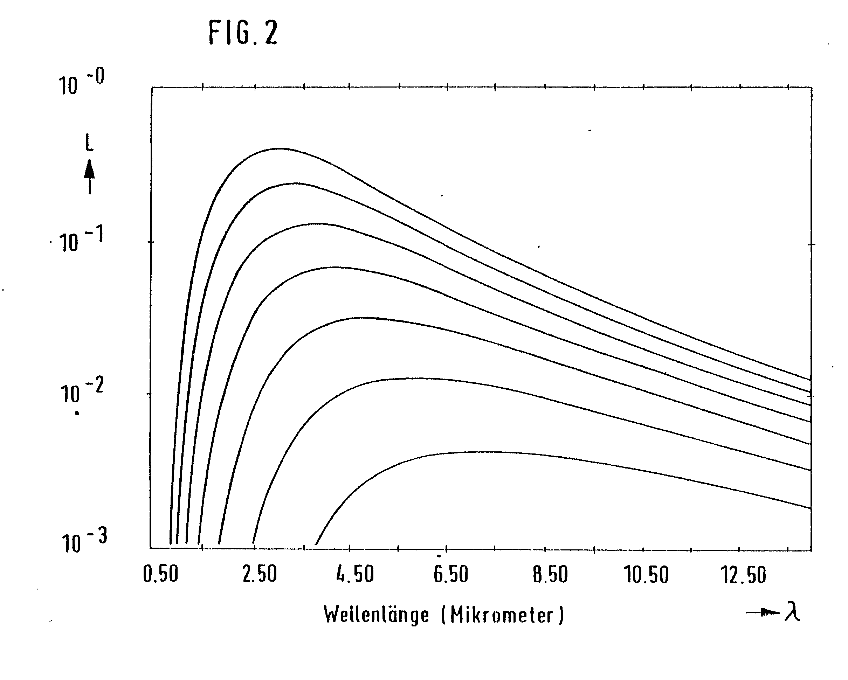

Bei bisher in der Praxis verwendeten Verfahren zur berührungslosen Temperaturmessung finden Radiometer oder Pyrometer Verwendung, die Strahlung in einem relativ breiten Spektralbereich zwischen etwa 3,0 bis 3,5 μm oder 8,0 bis 14,0 μm integral zu messen. Aus der in dem Spektralbereich integrierten Strahldichte bzw. Strahlstärke wird über eine Eichmessung nur die scheinbare Temperatur des Objekts bestimmt, weil Messung und Eichung selten unter gleichen geometrischen Bedingungen (Entfernung) stattfinden können, und das Ergebnis der Temperaturbestimmung durch den Transmissionsgrad der Atmosphäre verfälscht wird, wie in Verbindung mit den graphischen Darstellungen in Fig. 1 und 2 noch erläutert werden soll. Wenn der Emissionsgrad des Objekts nicht bekannt ist und von dem Wert 1 abweicht, wird das Ergebnis zusätzlich verfälscht, weil es ohne Korrektur nur für einen schwarzen Körper richtig ist, der wie das verwendete Eich-Standard einen Emissionsgrad von 1 aufweist.

In Fig. 1 ist auf der Abszisse die Wellenlänge $\lambda$ (in Mikrometer) aufgetragen und auf der Ordinate der Transmissionsgrad $\tau$ der Atmosphäre für 10, 50 bzw. 100 m Weglänge. In Fig. 2 ist auf der Abszisse ebenfalls die Wellenlänge $\lambda$ in Mikrometer und auf der Ordinate die spektrale Strahldichte L (in W CM$^{-2}$ SR$^{-1}$ Mikrometer$^{-1}$) aufgetragen. Die Kurven in Fig. 2 zeigen die spektrale Strahldichte schwarzer Körper ($\varepsilon = 1$) für verschiedene Temperaturen (400, 500, 600, 700, 800, 900 und 1 000 K). Im allgemeinen sind die natürlichen und künstlichen Objekte der Umgebung nicht schwarze, sondern graue Körper, deren Emissionsgrad kleiner als 1 ist. Strahldichtekurven schwarzer und grauer Körper gleicher Temperatur unterscheiden sich durch einen konstanten Faktor, den Emissionsgrad $\varepsilon$, wobei der graue Körper wegen seines geringeren Emissionsgrades eine geringere Strahldichte hat, so daß seine Kurve in der Fig. 2 unter der des schwarzen Körpers liegt. Dies bedeutet, daß abhängig vom Emissionsgrad die Strahldichtekurven aller schwarzen und grauen Objekte gleicher Temperatur sich durch den Faktor $\varepsilon$ unterscheiden, und daß damit die abgestrahlte Gesamtintensität unterschiedlich ist und sich aus zwei Komponenten zusammensetzt, deren eine proportional dem Emissionsgrad ist, deren andere von der Umgebungsstrahlung abhängt und proportional dem Reflexionsgrad des Objektes ist.

Körper, die weder schwarz noch grau sind, haben einen wellenlängenabhängigen Emissionsgrad $\varepsilon$,

der für diese Körper somit nicht konstant ist. Darüber hinaus ist zumindest bei hohen Temperaturen (Glut) der Emissionsgrad für die meisten Materialien auch von der Temperatur abhängig.

Bei bisher verwendeten Verfahren zur Bestimmung des Emissionsgrades finden sogenannte Emissiometer Verwendung, bei denen in einem (innen schwarzen, d. h. der Emissionsgrad der Innenwände ist gleich eins) abgeschlossenen, temperaturstabilisierten Gehäuse eine Probe des interessierenden Objekts oder Materials auf eine Temperatur geheizt wird, die höher als die Gehäusetemperatur ist. Über zwei Strahlungsmessungen, nämlich der der geheizten Probe und der der schwarzen Gehäuseinnenwand, läßt sich der Emissionsgrad der Probe bestimmen, unter der Voraussetzung, daß die Temperatur der Probe und der Gehäuseinnenwand bekannt sind (siehe Fig. 2). Darüber hinaus muß die Temperaturverteilung auf der Probe und an der Gehäuseinnenwand homogen sein. Eine homogene Temperaturverteilung an der Gehäuseinnenwand ist besonders bei hohen Probentemperaturen nicht zu gewährleisten, weil die Wand die Strahlung von der Probe absorbiert und sich dabei aufheizt. Eine genaue Temperaturbestimmung ist daher für die Gehäuseinnenwand schwierig. Bedingt durch die verwendeten Aufheizverfahren ist im allgemeinen die Temperatur der Probe nicht homogen.

Bezüglich der Messung der Temperatur und/oder des Emissionsgrads von Objekten ist ferner ein Verfahren und eine Vorrichtung zur berührungsungslosen Infrarotstrahlungsmessung der Temperatur eines natürlichen oder eines künstlichen Objektes bekannt, bei welchem die Strahlungsmessung in zwei oder mehr begrenzten Spektralbereichen durchgeführt wird, in welchen der Transmissionsgrad der Atmosphäre zumindest annähernd gleich eins (1) ist. Zur Bestimmung der Temperatur und/oder des Emissionsgrades des Objektes wird dann in einem einzigen Meßgang zu den in. den verschiedenen Spektralbereichen gemessenen Intensitäten eine Strahldichtekurve berechnet, indem durch Iterationsrechnung mit Hilfe des Planck'schen Strahlungsgesetzes die Temperatur ermittelt wird, die ein schwarzer Körper hat, dessen Strahldichtekurve parallel zu den gemessenen Intensitäten verläuft. Der Emissionsgrad des Objektes kann dann aus dem Verhältnis der gemessenen Intensitäten zu den entsprechenden Intensitäten eines schwarzen Körpers ermittelt werden (DE OS 31 15 887).

Den vorstehenden Ausführungen ist somit zu entnehmen, daß mit Hilfe der bisher bekannten Verfahren und Einrichtungen zur berührungslosen Messung der Temperatur von Objekten nur bei Kenntnis des Emissionsgrades des Meßobjektes und der Umgebungsstrahlung bzw. der Umgebungstemperatur eine eindeutige Temperaturbestimmung möglich ist ; außerdem ist die Korrektur des Atmosphäreneinflusses durch Ermittlung des Transmissionsgrades erforderlich.

Als Nachteil der bisher in der Praxis verwendeten Verfahren und Vorrichtungen zur Messung des Emissionsgrads von Objekten wird angesehen, daß die Temperaturen von Probe und Gehäuse nicht aus. den Strahlungsmessungen zur Emissionsgrädbestimmung ermittelt werden können, sondern nur sehr ungenau über zusätzliche Temperaturfühler gemessen werden müssen. Darüber hinaus ist die Temperaturmessung an Proben im Zustand glühender Schmelze gar nicht möglich, bzw. (wegen fehlender Kenttnis des Emissionsgrads) nur äußerst ungenau mit Pyrometern durchführbar ; hierbei tritt eine starke Aufheizung der Gehäuseinnenwand auf, was zu weiteren Meßfehlern führt. Ein weiterer Nachteil der herkömmlichen Verfahren und Vorrichtungen ist darin zu sehen, daß sie nicht bei hohen Temperaturen (beispielsweise auch bei glühenden Schmelzen) verwendet werden können. Um den genannten Schwierigkeiten der Temperaturkonstanz und -verteilung bei Probe und Gehäuseinnenwand zu begegnen, sind aufwendige Regelungen (Kühlung des Gehäuses) notwendig. Somit ist bei den bisher in der Praxis verwendeten Verfahren und Vorrichtungen ein verhältnismäßig großer Aufwand erforderlich.

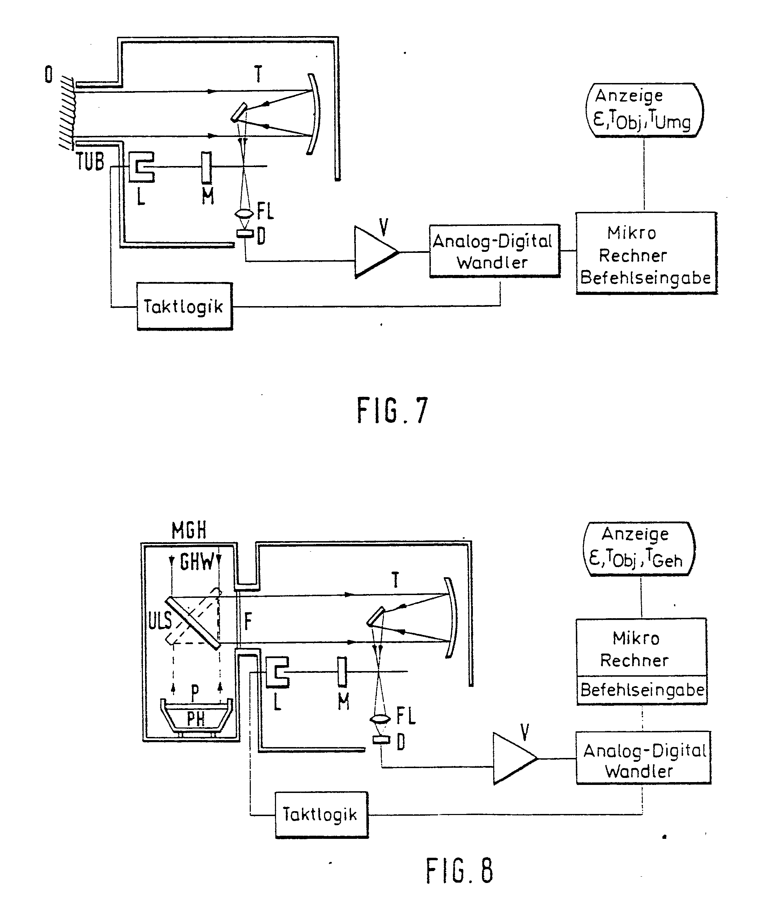

Aufgabe der Erfindung ist es daher, Verfahren zur berührungslosen, emissionsgradunabhängigen Messung der Temperatur eines Objektes und zur Bestimmung des Emissionsgrades unter möglichst weitgehender Vermeidung der angeführten Nachteile und Schwierigkeiten in der Weise zu verbessern, daß mit geringem Aufwand eine genauere, berührungslose und emissionsgradunabhängige Messung der Temperatur eines Objektes und gleichzeitig eine Messung seines Emissionsgrades sowie gegebenenfalls auch der Umgebungstemperatur bzw. eine genauere Messung des Emissionsgrades einer Probe und gleichzeitig eine Messung deren Temperatur und gegebenenfalls auch der Temperatur des Meßgehäuses (Fig. 8) in einem einzigen Meßgang durchführbar sind. Gemäß der Erfindung ist diese Aufgabe bei einem Verfahren nach dem Oberbegriff des Anspruchs 1 oder 5 durch die Merkmale im Kennzeichnenden Teil des Anspruchs 1 bzw. 5 gelöst. Vorteilhafte Weiterbildungen der erfindungsgemäßen Verfahren sowie Vorrichtungen zur Durchführung der Verfahren sind in den abhängigen Ansprüchen angegeben.

Bei derartigen Verfahren ist es deshalb möglich, nicht nur eine genauere Messung der tatsächlichen Temperatur des betreffenden Objektes ohne Kenntnis des Emissionsgrad durchzuführen, bzw. eine genauere Messung des Emissionsgrades der betreffenden Probe ohne Kenntnis ihrer Temperatur und der Meßgehäusetemperatur durchzuführen. Ein besonderer Vorteil der Erfindung liegt darin, daß darüber hinaus bei der Temperaturmessung auch die Bestimmung des Emissionsgrades des Objektes und der Umgebungstemperatur bzw. bei der Emissionsgradmessung auch die Bestimmung der Temperatur der Probe und der Gehäuseinnentemperatur jeweils in einem einzigen Meßgang durchführbar sind, so daß weder für die Bestimmung des Emissionsgrades des Objektes noch für die Bestimmung des Transmissionsgrades der Atmosphäre noch für die Bestimmung der Proben-, Gehäuse- oder Umgebungstemperatur zusätzliche Einrichtungen erforderlich sind. Bei Abweichungen vom Transmissionsgrad $\tau = l$ kann jedoch eine entsprechende Korrektur erfolgen.

Sollen (bei Temperaturmessung) Objekttemperatur, Emissionsgrad und Umgebungstemperatur bzw.

(bei Emissionsgradmessung) Emissionsgrad, Probentemperatur und Gehäuseinnentemperatur bestimmt werden, so sind zur Durchführung der Verfahren natürlich Messungen in drei begrenzten Spektralbereichen notwendig ; ist die Umgebungstemperatur bekannt oder ist die Gehäuseinnentemperatur bzw. die Gehäuseinnenstrahlung bekannt, so genügen Messungen in zwei Bereichen. So wird beispielsweise bei dem anhand von Fig. 6 nachstehend erläuterten Ausführungsbeispiel zur Temperaturmessung auf vorteilhafte Weise die Umgebungsstrahlung ermittelt oder beispielsweise bei dem nachstehend, anhand von Fig. 8 erläuterten Ausführungsbeispiel zur Emissionsgradmessung auf vorteilhafte Weise die Gehäuseinnenstrahlung ermittelt ; es erübrigt sich dann die Kenntnis der Umgebungstemperatur bzw. der Gehäusetemperatur. Die in dem Ausführungsbeispiel der Fig. 6 beschriebene Anordnung zur Temperaturmessung ist besonders vorteilhaft, wenn die Umgebungsstrahlung keine Schwarz- oder Graukörpercharakteristik hat (beispielsweise bei Messungen im sichtbaren Bereich, wie bei Gluttemperaturen).

Ein weiterer besonderer Vorteil der Erfindung ist darin zu sehen, daß bei ihr Temperatur und Emissionsgrad von Körpern oder Proben bestimmt werden können, welche nicht grau oder nicht schwarz sind, deren Emissionsgrad also wellenlängenabhängig ist. Für diesen Fall sind natürlich Messungen in mehreren begrenzten Wellenlängenbereichen notwendig. Das bei Emissionsgradmessung wegen der kurzen Meßstrecken im Gehäuse geringfügige Problem des Atmosphäreneinflusses kann — wenn nötig — dadurch gelöst werden, daß das Meßgehäuse mit einem infrarotstrahlungsdurchlässigen Gas (beispielsweise Stickstoff) geflutet wird. Bezüglich der Temperaturmessung kann mit Hilfe dieses Verfahrens ferner die Bestimmung der tatsächlichen Temperatur und des Produkts von Emissionsgrad und strahlender Fläche des Objekts erfolgen. Über die Messung der tatsächlichen strahlenden Fläche kann auch in diesem Fall der Emissionsgrad bestimmt werden. Der erste Fall bezieht sich deshalb auf eine Strahldichtemessung, während der zweite sich auf eine Strahlstärkemessung bezieht.

Das Problem des Atmosphäreneinflusses wird gemäß der Erfindung dadurch gelöst, daß eine spektralradiometrische Strahlungsmessung durchgeführt wird, daß also die Strahlung in mehreren definierten, mehr oder weniger schmalen Spektralbereichen gemessen wird, wobei als Spektralbereiche die gewählt werden, in denen der Transmissionsgrad der Atmosphäre möglichst gleich eins (1) ist. Geeignete Spektralbereiche im infraroten Bereich sind aus Fig. 1 ohne weiteres entnehmbar.

Für die Durchführung der Verfahren im sichtbaren bzw. infraroten Bereich ist der gesamte jeweilige Spektralbereich geeignet. Im Sichtbaren wird dabei natürlich nicht die Umgebungstemperatur oder die Gehäusetemperatur ermittelt, sondern eine Temperatur, die aus der sichtbaren Umgebungstrahlung bzw. aus der sichtbaren Strahlung (reflektiert an den Gehäusewänden) abgeleitet ist.

Zu den spektralradiometrisch gemessenen Intensitäten von beispielsweise drei Spektralbereichen wird eine Strahldichtekurve durch Iteration entsprechend den nachstehend angeführten Gleichungen (1) bis (3) bzw. (1') bis (3') ermittelt.

$$L_{M, \lambda_1} = \varepsilon \cdot L_{T_{Obj, \lambda_1}} + (1 - \varepsilon) \cdot L_{T_{Umg, \lambda_1}} \tag{1}$$

$$L_{M, \lambda_2} = \varepsilon \cdot L_{T_{Obj, \lambda_2}} + (1 - \varepsilon) \cdot L_{T_{Umg, \lambda_2}} \tag{2}$$

$$L_{M, \lambda_3} = \varepsilon \cdot L_{T_{Obj, \lambda_3}} + (1 - \varepsilon) \cdot L_{T_{Umg, \lambda_3}} \tag{3}$$

$$L_{M, \lambda_1} = \varepsilon \cdot L_{T_{Obj, \lambda_1}} + (1 - \varepsilon) \cdot L_{T_{Geh, \lambda_1}} \tag{1'}$$

$$L_{M, \lambda_2} = \varepsilon \cdot L_{T_{Obj, \lambda_2}} + (1 - \varepsilon) \cdot L_{T_{Geh, \lambda_2}} \tag{2'}$$

$$L_{M, \lambda_3} = \varepsilon \cdot L_{T_{Obj, \lambda_3}} + (1 - \varepsilon) \cdot L_{T_{Geh, \lambda_3}} \tag{3'}$$

$L_{M, \lambda_1}$ : gemessene Strahldichte bei der Wellenlänge $\lambda_l$

$L_{T_{Obj, \lambda l}}$ : nach Planck berechnete Strahldichte eines schwarzen Körpers der Temperatur $T_{Obj}$ (bzw. der Probe bei der Wellenlänge $\lambda_l$

$\varepsilon$ : Emissionsgrad des Objekts bzw. der Probe

$L_{T_{Umg, \lambda l}}$ : nach Planck berechnete Strahldichte eines schwarzen Körpers der Temperatur $T_{Umg}$ bei der Wellenlänge $\lambda_l$

$L_{T_{Geh, \lambda l}}$ : nach Planck berechnete Strahldichte eines schwarzen Körpers der Temperatur $T_{Geh}$ des Gehäuses bei der Wellenlänge $\lambda_l$

$(1 - \varepsilon)$ : Reflexionsgrad des Objektes bzw. der Probe.

Es liegen drei Gleichungen (1) bis (3) bzw. (1') bzw. (3') vor, aus denen sich die drei unbekannten Größen $\varepsilon$, $T_{Obj}$, $T_{Umg}$ bzw. $\varepsilon$, $T_{Obj}$, $T_{Geh}$ iterativ bestimmen lassen. Natürlich wird durch Messung bei mehr als drei Spektralbereichen (Wellenlängen) das System überbestimmt und damit das Ergebnis genauer (unter Berücksichtigung endlicher Meßgenauigkeiten), oder es ist möglich — im Falle eines nicht grauen oder nicht schwarzen Körpers — den Emissionsgrad $\varepsilon$ für verschiedene Wellenlängen zu bestimmen. Bei Strahlstärkemessungen ergibt sich die tatsächliche Temperatur und das Produkt von Emissionsgrad und strahlender Fläche. Durch Messung der tatsächlichen strahlenden Fläche kann die Berechnung des Emissionsgrades erfolgen.

Wird, wie anhand des Ausführungsbeispiels zur Emissionsgradmessung in Fig. 8 dargestellt, die Gehäuseinnenstrahlung gemessen, dann sind nur Messungen in zwei Spektralbereichen notwendig. Während in diesem Fall zwei identische Messungen (nämlich der Probe und der Gehäusewand) in jeweils den gleichen Spektralbereichen durchgeführt werden, verläuft hier die Iterationsrechnung unter folgender Abwandlung der Gleichungen (1) und (2)

$L_{T_{Geh,\lambda}}$ ist zu ersetzen durch $L_{M_{Geh,\lambda}}$ mit

$L_{M_{Geh,\lambda}}$ : gemessene Strahldichte der Gehäuseinnenwand bei der Wellenlänge $\lambda$.

Für den Fall, daß die Probe kein schwarzer oder grauer Strahler ist, ihr Emissionsgrad also wellenlängenabhängig ist, läßt er sich aber auch für die diskreten Wellenlängen der Messung bestimmen. Aus der Messung bei n Wellenlängen läßt er sich zumindest für n-2 Wellenlängen bestimmen ; wird die Gehäuseinnenstrahlung wie im Ausführungsbeispiel der Fig. 8 zusätzlich gemessen, dann kann der Emissionsgrad für n-1 Wellenlängen ermittelt werden.

Entsprechend den obigen Ausführungen können deshalb die tatsächliche Temperatur und der Emissionsgrad des Objektes bzw. der Emissionsgrad und die tatsächliche Probentemperatur, oder aber die tatsächliche Temperatur und das Produkt aus Emissionsgrad und strahlender Fläche der Objekte in Quasiechtzeit aus jeweils einem Meßgang simultan bestimmt werden. Darüber hinaus erbigt sich in den an erster oder dritter Stelle angeführten Fällen auch die Umgebungstemperatur, für den zweiten Fall ergibt sich auch die Gehäuseinnentemperatur.

Nachfolgend wird die Erfindung anhand von Ausführungsbeispielen unter Bezugnahme auf die anliegenden Zeichnungen im einzelnen erläutert. Es zeigen :

Fig. 1 und 2   grafische Darstellungen des Transmissionsgrades der Atmosphäre bzw. der spektralen Strahldichte schwarzer Körper in Abhängigkeit von der Wellenlänge ;

Fig. 3   eine schematische Darstellung einer bekannten Vorrichtung zur berührungslosen, emissionsgradunabhängigen Strahlungsmessung der Temperatur eines Objekts

Fig. 4   eine vergrößerte Draufsicht auf einen Modulator für die Ausführungsformen in Fig. 3, 6, 7 oder 8 ;

Fig. 5   eine dem Modulator in Fig. 4 zugeordnete Transmissionsbereiche wiedergebende Tabelle ;

Fig. 6 und 7   Abwandlungen der erfindungsgemäßen Vorrichtung nach Fig. 3, und

Fig. 8   eine schematische Darstellung einer Vorrichtung zur Bestimmung des Spektralemissionsgrades einer Probe gemäß der Erfindung.

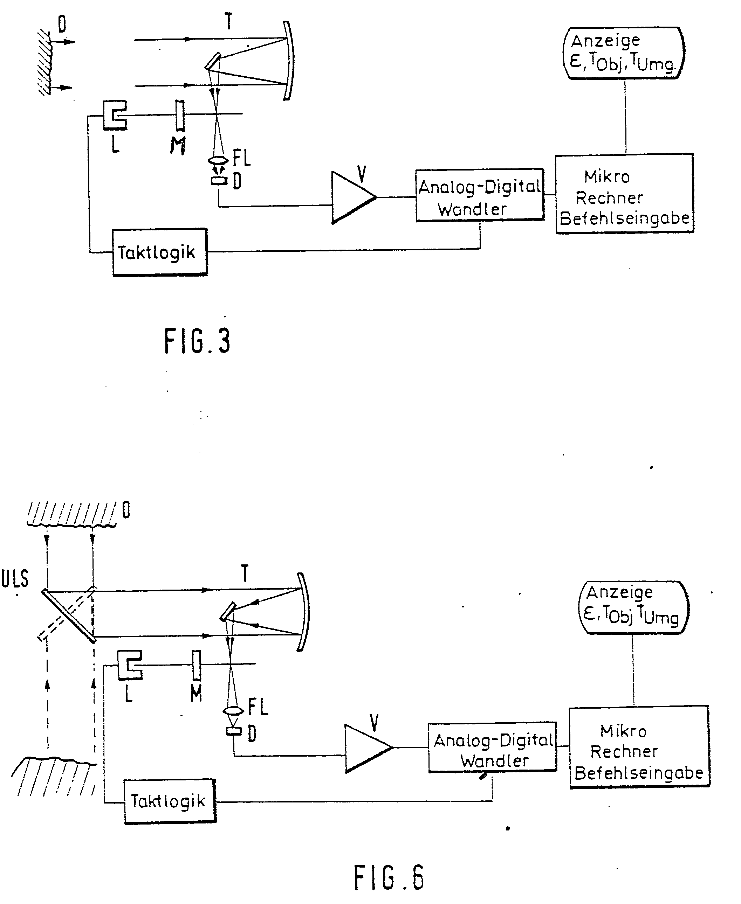

Bei dem in Fig. 3 dargestellten, aus DE-A-3 115 887, Fig. 1 bekannten Ausführungsbeispiel zur Temperaturmessung wird die von einem Objekt O emittierte Infrarotstrahlung vom Teleskop T eines Spektralradiometers gesammelt, umgelenkt und auf einen Modulator M fokussiert. Im weiteren Strahlengang wird die modulierte Strahlung von einer Feldlinse FL auf einen Detektor D fokussiert. Die durch die Strahlung im Detektor D erzeugten elektrischen Signale werden in einem Verstärker V verstärkt und von einem Analog-Digitalwandler mit einem Takt digitalisiert, der von dem Modulator M über eine Lichtschranke L abgegriffen und in einer Taktlogik aufbereitet wird. Aus den digitalisierten Meßwerten errechnet ein Mikrorechner durch Iteration über das Planck'sche Strahlungsgesetz Objekttemperatur $T_{OBj}$, Emissionsgrad $\varepsilon$ und Umgebungstemperatur $T_{Umg}$. Die tatsächliche Temperatur, der Emissionsgrad und die Umgebungstemperatur können mit Hilfe eines Anzeigegeräts angezeigt werden, sowie gegebenenfalls auch die tatsächlich strahlende Fläche.

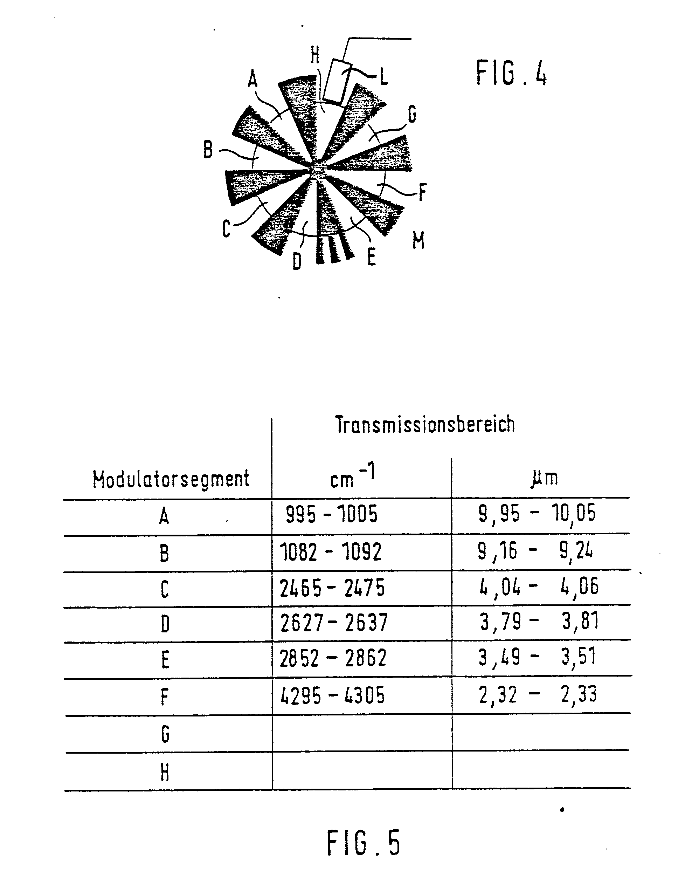

Der Mikrorechner verfügt über eine Befehlseingabeeinheit, durch welche Datenübernahme und Iterationsrechung gestartet werden können. Ebenso kann hier gegebenenfalls die Fläche des Meßobjekts eingegeben werden, oder es können bestimmte, zur Messung verwendete Spektralbereiche vorgewählt werden wie in Verbindung mit Fig. 4 und der Tabelle in Fig. 5 näher erläutert werden soll. Die Scheibe des Modulators M rotiert mit konstanter Geschwindigkeit, die der Detektorzeitkonstanten angepaßt ist. Die Scheibe besteht bei dem dargestellten Ausführungsbeispiel aus 16 gleichgroßen Kreissegmenten. Dabei handelt es sich abwechselnd um für Strahlung undurchlässige Segmente, die beispielsweise aus Aluminium bestehen, und um Infrarotfilter A bis H oder Filter für sichtbare Strahlung, die einen kleineren Radius als die undurchlässigen Segmente aus Aluminium aufweisen. Die Infrarotfilter können für Emissionsgradmessungen den jeweiligen Anwendungen angepaßt werden, bzw. es können für berührungslose Temperaturmessungen die in der Tabelle in Fig. 5 angegebenen Bereiche ausgewählt werden. Dies sind dann die Fig. 1 entnehmbaren Bereiche hoher Transmission der Atmosphäre. Die in der Tabelle freigelassenen Segmente G und H können gegebenenfalls mit weiteren Filtern bestückt werden. Im Sichtbaren sind zur Temperaturmessung Filter des ganzen Bereiches geeignet.

Die strahlungsundurchlässigen Segmente, die einen größeren Radius als die durchlässigen segmentförmigen Strahlungsfilter aufweisen, dienen als Modulatoren für die Lichtschranke L. Das Segment zwischen den Filtern D und E ist im Gegensatz zu den übrigen strahlungsundurchlässigen Segmenten derart ausgebildet, daß es statt eines langen Dunkelpulses drei kurze Dunkelpulse liefert. Bei einer Rotation der Scheibe im Uhrzeigersinn ist dieses Segment die Referenz für die Nullposition, d. h. nach Erscheinen der drei Dunkelpulse passiert das Filter A den der Lichtschranke gegenüberliegenden Strahlengang des Spektralradiometers, so daß der Detektor D nur Strahlung von dem Strahlungsfilter A mit dem in der Tabelle genannten Transmissionsbereich empfängt. Im weiteren Verlauf folgen nacheinander die Bereiche der Strahlungsfilter B bis H. Mit Hilfe dieser Taktung und eines Auswahlprogramms im Mikrorechner lassen sich drei beliebige oder bei dem dargestellten Ausführungsbeispiel bis zu acht Spektralbereiche für die Messung wählen und verwenden.

5

Entsprechend dem betreffenden Verwendungszweck kann eine an sich beliebige Anzahl von Spektralbereichen für die Messung gewählt werden.

Die Modulatorscheibe rotiert kontinuierlich. Die Datenübernahme beginnt nach zeitlich beliebigem Start an der Befehlseingabe immer erst dann, wenn sich das Filter A im Strahlengang befindet. Unmittelbar nach Durchlauf aller Segmente läuft die Iterationsrechnung ab. Dazu kann gegebenenfalls die Umgebungstemperatur auch aus anderer Messung eingegeben werden. Das Ergebnis kann nach wenigen Sekunden auf dem Anzeigegerät angezeigt werden. Die nächste Messung kann dann nach erneutem Start an der Befehlseingabe ausgelöst werden. Beispielsweise für Überwachungsaufgaben ist es auch möglich, durch einmaligen Start sekundenschnell aufeinanderfolgende, quasi kontinuierliche Messungen durchzuführen. Dies kann für eine bestimmte Anzahl von Messungen geschehen, oder bis zu einem Stoppbefehl an der Befehlseingabe. Für solche Fälle wird zusätzlich ein Speichergerät für die Ergebnisse vorgesehen.

Die strahlungsundurchlässigen Segmente des Modulators können auch hier beispielsweise zur Erzeugung einer konstanten Signalreferenz verspiegelt sein.

Das Iterationsprogramm berechnet die Summe der Planck'schen Strahlungskurven, die möglichst nahe zu den Meßwerten verläuft, und gibt Emissionsgrad, Objekttemperatur und gegebenenfalls Gehäusetemperatur zur Anzeige. Handelt es sich um eine Strahlstärkemessung, so wird das Produkt aus Fläche und Emissionsgrad angezeigt. Ist die Fläche bekannt, so läßt sich daraus der Emissionsgrad errechnen.

In Abwandlung der beschriebenen Ausführungsform ist es auch möglich, andere Spektralradiometer zu verwenden, weniger oder mehr, oder andere als die beschriebenen Spektralbereiche auszuwählen. Ebenso können die Meßwerte auch anders gespeichert und später in den Rechner eingegeben werden. Da im allgemeinen lediglich ein kleiner Mikrorechner erforderlich ist, ergibt sich ferner der Vorteil, daß eine Vorrichtung zur Durchführung des Verfahrens gemäß der Erfindung als tragbares, kompaktes Gerät geschaffen ist, das breite und wirtschaftliche Anwendungsmöglichkeiten eröffnet.

Eine möglich Abwandlung der anhand von Fig. 3 beschriebenen Ausführungsform ist in Fig. 6 dargestellt.

In diesem Fall wird durch die zwei möglichen Stellungen des Umlenkspiegels ULS entweder die Strahlung des Objekts oder die der ihm gegenüberliegenden Umgebung in das Meßgerät gelenkt. Während in diesem Fall zwei identische Messungen in jeweils den gleichen Spektralbereichen durchgeführt werden (nämlich des Objekts und der Umgebung), verläuft hier die Iterationsrechnung unter folgender Abwandlung der Gleichungen (1) und (2)

$L_{T_{Umg\lambda}}$ ist zu ersetzen durch $L_{M_{umg\lambda}}$ mit

$L_{M_{umg\lambda}}$ gemessene Strahldichte oder Umgebung bei der Wellenlänge $\lambda$.

In diesem Fall ist gegebenenfalls das Gleichungssystem für nur zwei unbekannte Größen zu lösen, nämlich für $T_{Obj}$ und $\varepsilon$.

Eine weitere Abwandlung der anhand von Fig. 3 beschriebenen Ausführungsform ist in Fig. 7 dargestellt. In diesem Fall befindet sich am Gerät (vor dessen Eintrittsöffnung) ein innen schwarzer Tubus TUB (wobei « innen schwarz » bedeutet, daß der Emissionsgrad der Innenwände gleich eins ist) ; der Tubus TUB ist so zu gestalten, daß er (mit dem Gerät) sehr nahe (möglichst auf Millimeter) an das jeweils zu messende Objekt herangeführt werden kann. Für Messungen an Walzen beispielsweise müßte der Tubus an seinem freien Ende dem jeweiligen Walzenradius entsprechend kreisförmig ausgeschnitten sein. Durch den Tubus wird erreicht, daß auf das Meßobjekt eine homogene Umgebungsstrahlung (nämlich von Tubus und Meßgerät) fällt. Besonders bei Objekten mit kleinem Emissionsgrad und in thermisch inhomogener Umgebung (in der Umgebung von beispielsweise mehreren unterschiedlich warmen Objekten) ist diese Ausführungsform geeignet, die Genauigkeit der Messung zu steigern.

Anstelle der Verwendung eines Tubus ist es auch möglich, das ganze Meßgerät mit einem zusätzlichen (innen schwarzen) Gehäuse zu umgeben, welches in der Sichtlinie des Geräts eine der Meßgeräteoptik und dem Meßobjekt angepaßte Öffnung hat. In diesem Fall ist wiederum die Verwendung eines Umlenkspiegels zur Messung der Gehäuseinnenstrahlung möglich.

Bei allen Anwendungsformen, die den Umlenkspiegel ULS verwenden, ist es möglich, dessen Antrieb so auszubilden, daß er in kurzen, diskreten Schritten gekippt werden kann, wodurch die Strahlung aus verschiedenen Umgebungsrichtungen gemessen werden kann (Abtasten der Umgebung), was für thermisch inhomogene Umgebungen von Vorteil sein kann. Diese Abtastung kann gegebenenfalls sowohl in vertikaler als auch in horizontaler Richtung erfolgen.

Auch ist es möglich, die Umgebungsstrahlung über eine Immersionslinse dem Detektor zuzuführen, wodurch die Strahlung des ganzen, dem Objekt gegenüberliegenden Halbraums erfaßt wird. Wenn technisch möglich, kann die Messung der Umgebungstemperatur natürlich auch mit berührenden Temperaturmeßfühlern erfolgen. In thermisch inhomogener Umgebung können ferner über entsprechend viele Messungen bei diskreten Wellenlängen die Temperatur und der Emissionsgrad verschiedener Objekte der Umgebung ermittelt werden.

In Fig. 8 ist schematisch eine Ausführungsform einer Vorrichtung zur Bestimmung des Spektralemissionsgrades eines Objektes dargestellt. Bei dem in Fig. 8 dargestellten Ausführungsbeispiel befindet sich in einem (innen schwarzen) Meßgehäuse MGH ein Probenhalter PH, der mit einer Einrichtung zum Heizen der von ihm gehaltenen Probe P versehen ist. In dem Gehäuse ist vor einem für sichtbare und/oder infrarote Strahlung durchlässigen Fenster F ein von außen (elektrisch oder von Hand) steuerbarer Umlenkspiegel ULS vorgesehen, der in einer Stellung die Strahlung von der Probe P zum Fenster F und in der anderen Stellung die Strahlung von der der Probe gegenüberliegenden Gehäusewand GHW zum Fenster F lenkt. Dieser Spiegel ist so justiert, daß er in beiden Fällen die Strahlung parallel zur optischen Achse des Teleskops eines Spektralradiometers lenkt, welches außen an das Fenster F montiert ist. Die vom Umlenkspiegel ULS jeweils zum Fenster F gelenkte Strahlung der Probe P bzw. der Gehäusewand wird von dem Teleskop T des Spektralradiometers gesammelt, umgelenkt, und von dem Modulator M fokussiert.

Im weiteren Strahlengang wird die modulierte Strahlung von einer Feldlinse FL auf einen Detektor fokussiert. Die durch die Strahlung im Detektor erzeugten, elektrischen Signale werden in einem Verstärker V verstärkt und von einem Analog-Digital-Wandler mit einem Takt digitalisiert, der von dem Modulator M über eine Lichtschranke L abgegriffen und in einer Taktlogik aufbereitet wird. Aus den digitalisierten Meßwerten errechnet ein Mikrorechner durch Iteration über das Planck'sche Strahlungsgesetz den Emissionsgrad $\varepsilon$, die Probentemperatur $T_{Obj}$ und die Gehäusetemperatur $T_{Geh}$. Der Emissionsgrad, die Probentemperatur und die Umgebungstemperatur können mit Hilfe eines Anzeigegeräts angezeigt werden.

Der Aufbau und die Arbeitsweise des Mikrorechners sowie des Modulators M sind dieselben, wie in Verbindung mit dem in Fig. 3 dargestellten und beschriebenen Ausführungsbeispiel bereits ausgeführt ist. Auch hier kann entsprechend dem betreffenden Verwendungszweck eine an sich beliebige Anzahl von Spektralbereichen für die Messung gewählt werden. Die Scheibe des Modulators M rotiert kontinuierlich. Die Datenübernahme beginnt nach zeitlich beliebigem Start an der Befehlseingabe immer erst dann, wenn sich das Filter A im Strahlengang befindet; der Umlenkspiegel ULS lenkt die Probenstrahlung zum Fenster F. Unmittelbar nach Durchlauf aller Segmente wird der Umlenkspiegel ULS, vom Mikrorechner initiiert, (motorisch oder von Hand) gekippt, so daß die Strahlung der Gehäusewand zum Spektralradiometer gelangt. Auch hier beginnt die Datenübernahme, sobald nach Erfolg der Kippung des Spiegels das Filter A sich im Strahlengang befindet.

Bezüglich der Filter gelten auch hier die zur Temperaturmessung gemachten Ausführungen wobei hier sowohl im Sichtbaren, als auch im Infraroten Filter des ganzen Bereichs geeignet sind; bei Messungen im Infraroten kann gegebenenfalls das Meßgehäuse mit einem infrarotstrahlungsdurchlässien Gas (z. B. Stickstoff) geflutet werden.

Unmittelbar nach Durchlauf aller Segmente läuft die Iterationsrechnung ab. Das Ergebnis kann nach wenigen Sekunden auf dem Anzeigegerät angezeigt werden. Die nächste Messung kann dann nach erneutem Start an der Befehlseingabe ausgelöst werden. Beispielsweise für Messungen während der Probenheizphase ist es auch möglich, durch einmaligen Start sekundenschnell aufeinanderfolgende, quasikontinuierliche Messungen durchzuführen. Dies kann für eine bestimmte Anzahl von Messungen geschehen oder bis zu einem Stoppbefehl an der Befehlseingabe. Für solche Fälle wird zusätzlich ein Speichergerät für die Ergebnisse vorgesehen. Gegebenenfalls (beispielsweise für den Fall, daß die Probe ein schwarzer bzw. grauer Strahler ist) kann auf die Messung der Strahlung der Gehäusewand verzichtet werden.

Die strahlungsundurchlässigen Segmente des Modulators können auch hier beispielsweise zur Erzeugung einer konstanten Signalreferenz verspiegelt sein. Das Iterationsprogramm berechnet die Summe der Planck'schen Strahlungskurven, die möglichst nahe zu den Meßwerten verläuft, und gibt Emissionsgrad, Objekttemperatur und gegebenenfalls Gehäusetemperatur zur Anzeige.

In Abwandlung der beschriebenen Ausführungsform ist es auch möglich, andere Spektralradiometer zu verwenden, weniger oder mehr oder auch andere als die beschriebenen Spektralbereiche auszuwählen. Ebenso können die Meßwerte auch anders gespeichert und später in den Rechner eingegeben werden. Je nach Anwendungszweck kann das Gerät mit einem Detektor oder mit Filtern für den sichtbaren oder infraroten Spektralbereich allein ausgerüstet sein, oder mit einem Detektor, der im gesamten Bereich empfindlich ist und entsprechend mit Filtern für den gesamten Bereich; natürlich ist es auch möglich, Detektoren, Modulatorscheiben und/oder Filtersegmente auswechselbar auszuführen. Ferner ist es auch möglich, den Umlenkspiegel in einzelnen, diskreten Schritten weiterzulenken und so die Messung der Gerhäuseinnenstrahlung an verschiedenen Stellen der Innenwand durchzuführen. Außerdem ist es auch möglich, den Probenhalter mit einer Kühleinrichtung zu versehen, um für bestimmte Anwendungszwecke die Probe zu kühlen; zu Verhinderung von Vereisungen ist hier auch die Flutung des Gehäuses mit trockenen (wasserfreien) Gasen möglich.

Aus der Tatsache, daß zur Durchführung der Iterationsrechnung im allgemeinen ein Mikrorechner ausreicht, der mit in die Vorrichtung zur Durchführung des Verfahrens gemäß der Erfindung eingebaut werden kann, ergibt sich der weitere Vorteil, daß die Vorrichtung u. a. auch als kompaktes Gerät ausgeführt werden kann, das breite und wirtschaftliche Anwendungsmöglichkeiten eröffnet.

**Patentansprüche**

1. Verfahren zur berührungslosen, emissionsgradunabhängigen Strahlungsmessung der Temperatur eines Objektes, bei welchem Verfahren in mehreren Wellenlängenbereichen im Sichtbaren und/oder Infraroten Strahldichten oder -stärken erfaßt werden, und aus einer Reihe von mindestens zwei Strahldichten oder -stärken durch Iterationsrechnung mit Hilfe des Planck'schen Strahlungsgesetzes eine Strahlungs-Wellenlängenkurve gewonnen wird, dadurch gekennzeichnet, daß die dieser Kurve ähnlichste Kurve mit Hilfe des Planck'schen Strahlungsgesetzes als Summe der Strahldichte (-stärke) eines Strahlers mit der Temperatur und dem Emissionsgrad des Objektes und der Strahldichte (-stärke) eines Strahlers mit der Temperatur der Umgebung, reflektiert am Objekt mit dem Reflexionsgrad ($\rho = 1$ — $\varepsilon$; $\varepsilon$ Emissionsgrad), gesucht wird, und daß die der für das Objekt gefundenen Planck'schen Kurve entsprechende Temperatur als wahre Temperatur des Objekts ermittelt wird.

2. Verfahren nach Anspruch 1, dadurch gekennzeichnet, daß der Emissionsgrad des Strahlers aus der für das Objekt gefundenen Planck'schen Kurve als wahrer Emissionsgrad des Objekts ermittelt wird.

3. Verfahren nach Anspruch 1, dadurch gekennzeichnet, daß die der für die Umgebung gefundenen Planck'schen Kurve entsprechende Temperatur als wahre Temperatur der Umgebung ermittelt wird.

4. Verfahren nach Anspruch 1, dadurch gekennzeichnet, daß die Umgebungstemperatur ausschließlich durch Iterationsrechnung ermittelt wird.

5. Verfahren zur Bestimmung des Spektralemissionsgrades einer Probe, bei welchem Verfahren in mehreren Wellenlängenbereichen im Sichtbaren und/oder Infraroten Strahldichten erfaßt werden, und aus einer Reihe von mindestens zwei Strahldichten durch Iterationsrechnung mit Hilfe des Planck'schen Strahlungsgesetzes eine Strahlungs-Wellenlängenkurve gewonnen wird, dadurch gekennzeichnet, daß die dieser Kurve ähnlichste Kurve mit dem Planck'schen Strahlungsgesetz als Summe der Strahldichte eines Strahlers mit der Temperatur und dem Emissionsgrad der Probe und der Strahldichte eines Strahlers mit der Temperatur der Meßgehäuseinnenwand, reflektiert an der Probe mit dem Reflexionsgrad ($\rho = 1$ — $\varepsilon$, $\varepsilon$ Emissionsgrad), gesucht wird, und daß der der für die Objektprobe gefundenen Planck'schen Kurve entsprechende Emissionsgrad als der wahre Emissionsgrad der Probe ermittelt wird.

6. Verfahren nach Anspruch 5, dadurch gekennzeichnet, daß die Temperatur der Probe aus der für die Probe gefundenen Planck'schen Kurve als die wahre Temperatur der Probe ermittelt wird.

7. Verfahren nach Anspruch 5, dadurch gekennzeichnet, daß die der für die Gehäuseinnenwand gefundenen Planck'schen Kurve entsprechende Temperatur als wahre Temperatur der Gehäuseinnenwand ermittelt wird.

8. Verfahren nach Anspruch 5, dadurch gekennzeichnet, daß die Gehäuseinnentemperatur ausschließlich über die Iterationsrechnung ermittelt wird.

9. Vorrichtung zur Durchführung des Verfahrens nach einem der Ansprüche 1 bis 4, mit einem Spektralradiometer für Strahlungsmessungen in diskreten Wellenlängenbereichen, das einen Modulator aufweist, über den die von dem Objekt ausgehende Strahlung entsprechend den Transmissionsbereichen von zwei (drei) oder mehr Filtern (im Sichtbaren und/oder Infraroten) in dem Modulator auf eine Detektoreinrichtung gelangt, wobei die Ausgangssignale der Detektoreinrichtung über einen Verstärker einem Analog-Digitalwandler zugeführt werden, für welchen eine Taktsteuerung in Abhängigkeit von einer dem Modulator zugeordneten Lichtschranke vorgesehen ist, und bei welcher Vorrichtung zur Durchführung einer Iterationsrechnung ein Mikroprozessor angeschlossen ist, über den ein Anzeigegerät zur Anzeige der tatsächlichen Temperatur, des Emissionsgrades des Objektes und der Umgebungstemperatur betätigbar ist, dadurch gekennzeichnet, daß das Spektralradiometer neben dem Modulator (M) einen Umlenkspiegel (ULS) aufweist, welcher derart kippbar ist, daß die Strahlung der dem Objekt gegenüberliegenden Umgebung in gleicher Weise wie die Objektstrahlung über den Modulator auf die Detektoreinrichtung (D) gelangt.

10. Vorrichtung nach Anspruch 9, dadurch gekennzeichnet, daß die Umgebungstemperatur durch einen berührungslosen Fühler meßbar ist.

11. Vorrichtung nach Anspruch 9, dadurch gekennzeichnet, daß das Meßgerät mit einem der Meßgeräteoptik und der Geometrie des Meßobjekts angepaßten Tubus (TUB) oder Gehäuse versehen ist, wodurch thermisch inhomogene Umgebungsstrahlung vom Objekt ferngehalten wird.

12. Vorrichtung zur Durchführung des Verfahrens nach einem der Ansprüche 5 bis 8, mit einem Spektralradiometer für Strahlungsmessungen in diskreten Wellenlängenbereichen, das einen Modulator aufweist, über den die von einer Probe ausgehende Strahlung entsprechend den Transmissionsbereichen von zwei (drei) oder mehr Filtern (im Sichtbaren oder Infraroten) in dem Modulator auf eine Detektoreinrichtung gelangt, wobei die Ausgangssignale der Detektoreinrichtung über einen Verstärker einem Analog-Digitalwandler zugeführt werden, für den eine Taktsteuerung in Abhängigkeit von einer dem Modulator zugeordneten Lichtschranke vorgesehen ist, und wobei zur Durchführung einer Iterationsrechnung ein Mikroprozessor angeschlossen ist, über den ein Anzeigegerät zur Anzeige des Emissionsgrades, der tatsächlichen Probentemperatur und der tatsächlichen Gehäusetemperatur betätigbar ist, dadurch gekennzeichnet, daß ein mit einem strahlungsdurchlässigen Fenster (F) versehenes, abgeschlossenes Meßgehäuse (MGH) vorgesehen ist, dessen Innenwände den Emissionsgrad eins (1) haben, daß in dem Meßgehäuse ein Probenhalter (PH) zur Aufnahme der Probe (P) und eine Einrichtung zum Heizen (bis zur Schmelze) und/oder Kühlen der Probe vorgesehen sind, daß in dem Meßgehäuse (MGH) sich ferner ein Umlenkspiegel (ULS) vor dem Fenster (F) befindet, über welchen entweder die Strahlung der Probe (P) oder die der Gehäuseinnenwand auf das Fenster (F) gelenkt wird, und daß durch Kippen des Umlenkspiegels (ULS) die Strahlung der Gehäuseinnenwand in gleicher Weise wie die von der Probe ausgehende Strahlung über den Modulator (M) auf die Detektoreinrichtung (D) gelangt.

EP 0 129 150 B1

13. Vorrichtung nach Anspruch 12, dadurch gekennzeichnet, daß das Meßgehäuse gasdicht ist und eine Flutung (Spülung) mit Gasen durchführbar ist.

14. Vorrichtung nach Anspruch 9 oder 12, dadurch gekennzeichnet, daß eine Detektoreinrichtung vorgesehen ist, deren Spektralempfindlichkeit Messungen im Bereich der sichtbaren und/oder der infraroten Strahlung bis zu einer Wellenlänge von etwa 14 μm ermöglicht, und daß die Filter (im Sichtbaren und/oder Infraroten) bei diskreten Wellenlängen innerhalb dieses Bereichs durchlässig sind.

## Claims

1. Method for the contactless radiation measurement, independently of emissivity, of the temperature of an object, in which method beam densities or intensities are detected in several wavelength ranges in the visible or infra-red part of the spectrum and a radiation/wavelength curve is obtained from a series of at least two beam densities or intensities through iterative calculation with the aid of Planck's law of radiation, characterised thereby, that the curve most similar to this curve is sought with the aid of Planck's law of radiation as sum of the beam density (intensity) of a radiator at the temperature and with the emissivity of the object and of the beam density (intensity) of a radiator at the temperature of the environment, reflected at the object with the reflectivity ($\rho = 1 - \varepsilon$, $\varepsilon$ emissivity) and that the temperature, which corresponds to the Planck's curve found for the object, is determined as the true temperature of the object.

2. Method according to claim 1, characterised thereby, that the emissivity of the radiator is determined from the Planck's curve found for the object as the true emissivity of the object.

3. Method according to claim 1, characterised thereby, that the temperature, which corresponds to the Planck's curve found for the environment, is determined as the true temperature of the environment.

4. Method according to claim 1, characterised thereby, that the ambient temperature is determined exclusively by iterative calculation.

5. Method for the determination of the spectral emissivity of a sample, in which method beam densities are detected in several wavelength ranges in the visible and/or infra-red part of the spectrum and a radiation/wavelength curve is obtained from a series of at least two beam densities through iterative calculation with the aid of Planck's law of radiation, characterised thereby, that the curve most similar to this curve is sought by Planck's law of radiation as sum of the beam density of a radiator at the temperature and with the emissivity of the sample and of the beam density of a radiator at the temperature of the inside wall of the measurement housing, reflected at the sample with the reflectivity ($\rho = 1 - \varepsilon$, $\varepsilon$ emissivity) and that the emissivity, which corresponds to the Planck's curve found for the object sample, is determined as the true emissivity of the sample.

6. Method according to claim 5, characterised thereby, that the temperature of the sample is determined from the Planck's curve found for the sample as the true temperature of the sample.

7. Method according to claim 5, characterised thereby, that the temperature, which corresponds to the Planck's curve found for the inside wall of the housing, is determined as the true temperature of the inside wall of the housing.

8. Method according to claim 5, characterised thereby, that the temperature of the inside wall of the housing is determined exclusively by iterative calculation.

9. Apparatus for the performance of the method according to one of the claims 1 to 4, with a spectral radiometer for radiation measurements in discrete wavelength ranges, which displays a modulator, by way of which the radiation emanating from the object gets, in accordance with the transmission ranges of two (three) or more filters (in the visible and/or infra-red part of the spectrum) in the modulator, on to a detector equipment, wherein the output signals of the detector equipment are conducted by way of an amplifier to an analog-to-digital converter, for which a cyclic control is provided in dependence on a light barrier associated with the modulator and in which apparatus a microprocessor, by way of which an indicating device is actuable for indication of the actual temperature, the emissivity of the object and the ambient temperature, is connected for the performance of an iterative calculation, characterised thereby, that the spectral radiometer, apart from the modulator (M), displays a deflecting mirror (ULS), which is tiltable in such a manner that the radiation in the surroundings lying opposite the object gets by way of the modulator onto the detector equipment (D) in the same manner as the object radiation.

10. Apparatus according to claim 9, characterised thereby, that the ambient temperature is measurable by a contactless sensor.

11. Apparatus according to claim 9, characterised thereby, that the measuring apparatus is provided with a tubus (TUB) or housing matched to the optical system of the measuring apparatus and the geometry of the measurement object, whereby thermally inhomogeneous ambient radiation is kept away from the object.

12. Apparatus for the performance of the method according to one of the claims 5 to 8, with a spectral radio-meter for radiation measurements in discrete wavelength ranges, which displays a modulator, by way of which the radiation emanating from the sample gets, in accordance with the transmission ranges of two (three) or more filters (in the visible and/or infra-red part of the spectrum) in the modulator, onto a detector equipment, wherein the output signals of the detector equipment are

9

conducted by way of an amplifier to an analog-to-digital converter, for which a cyclic control is provided in dependence on a light barrier associated with the modulator and wherein a microprocessor, by way of which an indicating device is actuable for indication of the emissivity, the actual sample temperature and the actual housing temperature, is connected for the performance of an iterative calculation, characterised thereby, that a sealed measurement housing (MGH) is provided, which is provided with a radiation-permeable window (F) and the inside walls of which have the emissivity unity (1), that a sample holder (PH) for the reception of the sample (P) and an equipment for the heating (up to melting point) and/or cooling of the sample are provided in the measurement housing, that a deflecting mirror (ULS) is furthermore disposed in front of the window (F) and in the measurement housing, by way of which mirror the radiation of the sample (P) or that of the inside wall of the housing is deflected onto the window (F) and that, through tilting of the deflecting mirror (ULS), the radiation of the inside wall of the housing gets by way of the modulator (M) onto the detector equipment (D) in the same manner as the radiation emanating from the sample.

13. Apparatus according to claim 12, characterised thereby, that the measurement housing is gas-tight and a flushing (rinsing) by gases is performable.

14. Apparatus according to claim 9 or 12, characterised thereby, that a detector equipment is provided, the spectral sensitivity of which makes measurements possible in the range of the visible and/or the infra-red radiation up to a wavelength of about 14 micrometres and that the filters (in the visible and/or infra-red part of the spectrum) are permeable at discrete wavelengths within this range.

**Revendications**

1. Procédé pour déterminer, sans contact, la température d'un objet en mesurant le rayonnement de l'objet indépendamment de son facteur d'émission, dans lequel les densités ou intensités de rayonnement sont déterminées à l'intérieur de plusieurs gammes de longueurs d'onde dans le domaine du visible et/ou de l'infrarouge, et dans lequel, à partir d'une série d'au moins deux densités ou intensités de rayonnement, est établie une courbe de longueurs d'ondes de rayonnement par un calcul itératif à l'aide de la loi de rayonnement de Planck, caractérisé en ce que la courbe se rapprochant le plus de cette courbe est recherchée à l'aide de la loi de rayonnement de Planck en tant que somme de la densité (intensité) de rayonnement d'un corps rayonnant présentant la température et le facteur d'émission de l'objet et la densité (intensité) de rayonnement d'un corps rayonnant présentant la température du milieu environnant, réfléchie sur l'objet présentant le degré de réflexion ($\rho = 1 - \varepsilon$, $\varepsilon$ étant le facteur de l'émission), et en ce que la température correspondant à la courbe de Planck trouvée pour l'objet est déterminée en tant que température réelle de l'objet.

2. Procédé selon la revendication 1, caractérisé en ce qu'à partir de la courbe de Planck trouvée pour l'objet, le facteur d'émission du corps rayonnant est déterminé en tant que facteur d'émission réel de l'objet.

3. Procédé selon la revendication 1, caractérisé en ce que la température correspondant à la courbe de Planck trouvée pour le milieu environnant est déterminée en tant que température réelle du milieu environnant.

4. Procédé selon la revendication 1, caractérisé en ce que la température du milieu environnant est déterminée exclusivement par calcul itératif.

5. Procédé pour la détermination du facteur d'émission spectrale d'un objet, dans lequel à l'intérieur de plusieurs gammes de longueurs d'onde dans le domaine du visible et/ou de l'infrarouge sont déterminées des densités de rayonnement, et à partir d'une série d'au moins deux densités de rayonnement est établie une courbe de longueurs d'ondes de rayonnement par calcul itératif et à l'aide de la loi de rayonnement de Planck, caractérisé en ce que la courbe se rapprochant le plus de cette courbe est recherchée à l'aide de la loi de rayonnement de Planck en tant que somme de la densité de rayonnement d'un corps rayonnant présentant la température et le facteur d'émission de l'échantillon, et de la densité de rayonnement d'un corps rayonnant présentant la température de la paroi intérieure de l'enceinte de mesure, réfléchie sur l'échantillon présentant le facteur de réflexion ($\rho = 1 - \varepsilon$, $\varepsilon$ étant le facteur d'émission), et en ce que le facteur d'émission correspondant à la courbe de Planck trouvée pour l'échantillon formant l'objet est établi en tant que facteur d'émission réel de l'objet.

6. Procédé selon la revendication 5, caractérisé en ce qu'à partir de la courbe de Planck trouvée pour l'échantillon, la température de l'échantillon est déterminée en tant que température réelle de celui-ci.

7. Procédé selon la revendication 5, caractérisé en ce que la température correspondant à la courbe de Planck trouvée pour la paroi intérieure de l'enceinte est déterminée en tant que température réelle de la paroi intérieure de l'enceinte.

8. Procédé selon la revendication 5, caractérisé en ce que la température intérieure de l'enceinte est déterminée exclusivement par calcul itératif.

9. Dispositif pour la mise en œuvre du procédé selon l'une des revendications 1 à 4, comprenant un spectroradiomètre destiné à des mesures de rayonnement dans des gammes de longueurs d'onde discrètes présentant un modulateur par l'intermédiaire duquel le rayonnement issu de l'objet parvient, en fonction des domaines de transmission de deux (trois) ou plusieurs filtres (dans le domaine du visible et/ou de l'infrarouge) dans le modulateur, à un équipement détecteur, les signaux de sortie de l'équipement détecteur étant amenés par l'intermédiaire d'un amplificateur à un convertisseur analogique-numérique pour lequel est prévue une commande cadencée en fonction d'une barrière lumineuse associée au modulateur, et auquel dispositif est connecté, afin d'effectuer un calcul itératif, un microprocesseur par l'intermédiaire duquel un appareil indicateur peut être actionné pour indiquer la température réelle, le facteur d'émission de l'objet et la température du milieu environnant, caractérisé en ce que le spectroradiomètre comporte, outre le modulateur (M), un miroir déviateur (ULS) qui peut être amené à basculer de manière que le rayonnement du milieu environnant situé en regard de l'objet parvienne, de la même manière que le rayonnement de l'objet, par l'intermédiaire du modulateur à l'équipement détecteur (D).

10. Dispositif selon la revendication 9, caractérisé en ce que la température du milieu environnant peut être mesurée par une sonde agissant sans contact.

11. Dispositif selon la revendication 9, caractérisé en ce que l'appareil de mesure est muni d'un tube (TUB) ou d'une enveloppe adapté au système optique de l'appareil de mesure et à la géométrie de l'objet à mesurer, permettant ainsi de tenir éloigné de l'objet tout rayonnement thermiquement non homogène du milieu environnant.

12. Dispositif pour la mise en œuvre du procédé selon l'une des revendications 5 à 8, comprenant un spectroradiomètre destiné à effectuer des mesures de rayonnement dans des gammes de longueurs d'onde discrètes, lequel spectroradiomètre comporte un modulateur par l'intermédiaire duquel le rayonnement issu d'un échantillon parvient, en fonction des domaines de transmission de deux (trois) ou d'un plus grand nombre de filtres (dans le domaine du visible ou de l'infrarouge) dans le modulateur, à un équipement détecteur, les signaux de sortie de l'équipement détecteur étant amenés par l'intermédiaire d'un amplificateur à un convertisseur analogique-numérique pour lequel est prévue une commande cadencée en fonction d'une barrière lumineuse associée au modulateur, et auquel dispositif est en outre connecté, afin d'effectuer un calcul itératif, un microprocesseur par l'intermédiaire duquel un appareil indicateur peut être actionné pour indiquer le facteur d'émission, la température réelle de l'échantillon et la température réelle de l'enceinte, caractérisé en ce qu'il est prévu une enceinte de mesure fermée (MGH) qui présente une fenêtre (F) laissant passer le rayonnement, dont les parois intérieures présentent le facteur d'émission un (1), en ce que dans l'enceinte de mesure sont prévus un porte-échantillon (PH) destiné à recevoir l'échantillon (P) et un équipement pour chauffer (jusqu'à la fusion) et/ou pour refroidir l'échantillon, en ce que dans l'enceinte de mesure (MGH) se trouve en outre devant la fenêtre (F) un miroir déviateur (ULS) par l'intermédiaire duquel soit le rayonnement de l'échantillon (P) soit le rayonnement de la paroi intérieure de l'enceinte est dirigé sur la fenêtre (F), et en ce que par basculement du miroir déviateur (ULS), le rayonnement de la paroi intérieure de l'enceinte est amené, de la même façon que le rayonnement issu de l'échantillon, à parvenir par l'intermédiaire du modulateur (M) à l'équipement détecteur (D).

13. Dispositif selon la revendication 12, caractérisé en ce que l'enceinte de mesure est étanche aux gaz, et qu'un remplissage (balayage) avec des gaz peut être effectué.

14. Dispositif selon la revendication 9 ou 12, caractérisé en ce qu'il est prévu un équipement détecteur dont la sensibilité spectrale permet des mesures dans le domaine du rayonnement visible et/ou du rayonnement infrarouge jusqu'à une longueur d'onde d'environ 14 µm, et en ce que les filtres (dans le domaine du visible et/ou de l'infrarouge) laissent passer le rayonnement pour des longueurs d'onde discrètes à l'intérieur de ce domaine.

FIG.1

FIG.2

Wellenlänge (Mikrometer)

$\longrightarrow \lambda$

2

FIG.3

FIG.6

FIG.4

| Modulatorsegment | Transmissionsbereich | |
| :---: | :---: | :---: |
| | cm$^{-1}$ | μm |
| A | 995 - 1005 | 9,95 - 10,05 |
| B | 1082 - 1092 | 9,16 - 9,24 |
| C | 2465 - 2475 | 4,04 - 4,06 |
| D | 2627 - 2637 | 3,79 - 3,81 |
| E | 2852 - 2862 | 3,49 - 3,51 |
| F | 4295 - 4305 | 2,32 - 2,33 |
| G | | |
| H | | |

FIG.5

FIG. 7

FIG. 8